(19) Europäisches Patentamt
European Patent Office
Office européen des brevets

(11) **EP 3 451 109 A1**

(12) **EUROPEAN PATENT APPLICATION**

(43) Date of publication:
06.03.2019 Bulletin 2019/10

(51) Int Cl.:
**G05D 23/19** (2006.01)  **F24D 19/10** (2006.01)

(21) Application number: 17306116.9

(22) Date of filing: 31.08.2017

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Netatmo**
**92100 Boulogne Billancourt (FR)**

(72) Inventors:
• **GABRIEL, Chadi**
 **92160 ANTONY (FR)**
• **POTTER, Frédéric**
 **92200 NEUILLY-SUR-SEINE (FR)**

(74) Representative: **Nguyen-Van-Yen, Christian**
**Marks & Clerk France**
**Conseils en Propriété Industrielle**
**Immeuble Visium**
**22, Avenue Aristide Briand**
**94117 Arcueil Cedex (FR)**

(54) **SYSTEM AND METHOD FOR DEFINING A VALVE APERTURE**

(57) The invention concerns a thermostatic valve (TRV, 21), comprising an aperture (5) to adjust a flow of transfer fluid from a thermal energy generator (10) entering a heat exchanger (11), the TRV (21) comprising:
- a communication link (31) to a processing unit;
- an input interface configured to acquire at least one TRV-defined temperature setpoint;
wherein the TRV (21) is further configured to calculate a first aperture setting of the aperture (5) to be set, the first aperture setting being defined as a function of a temperature configuration model available at the processing unit and environmental parameters.

The invention also concerns a method for defining a valve aperture.

FIG. 2

**Description**

**FIELD**

The invention relates to the field of smart thermal management of household consumer devices and, in particular, the thermal control within a room or a house or a building. The invention concerns a system and method for defining a valve aperture of a thermostatic radiator valve. Although many of the features of this invention will be described in relation to a residential home environment, it is understood that they are generally applicable to office and industrial building applications or the like.

**BACKGROUND**

Over the last decades, many products have been introduced in order to control heat emitters within a room or a house. A traditional solution, still widespread, is to perform a room per room (or area per area) heat management inside a building. Each heat emitter is equipped with a valve, or more generally a regulating device of a flux that regulates the heat flux inside the heat emitter. The valve is either a manually operated mechanical valve or a thermostatic valve.

In the case of a mechanical valve, the user adjusts the position of the valve depending on the ambient temperature he or she wishes inside the room. If the room comprises many heat emitters, the user has to adjust the position of each valve. This way to proceed is tedious.

A thermostatic valve, also called a thermostatic radiator valve, is a self-regulating valve fitted to a hot water heating system radiator, to control the temperature of a room by changing the flow of hot water to the radiator. Such a valve gradually closes as the temperature of the surrounding area increases, limiting the amount of hot water entering the radiator.

A thermostatic valve allows a better thermal management within a room without a need of manually adapting the position of the valve. It is also possible to program various time slots, each corresponding to a temperature setpoint in the room. For example, the temperature setpoint of each valve may be set at 20°C from 7 am to 11 pm and at 18°C during the night, so as to save energy. To this end, a thermostat can be used to control operation of a central heating system, for example a boiler or more generally a heat generator, and regulate the temperature of one or more rooms by setting a temperature setpoint and monitoring the temperature within the home. If the room temperature falls below the temperature setpoint, the thermostat sends an appropriate signal to the heating system to regulate the temperature according to a predetermined heating schedule.

Today, a variety of communication mediums may be used to enable the thermal control within a room or a house in combination with thermostatic valves, for example power lines, cabled or wireless networks. The user may perform this thermal control with a connection, via the Internet as example, allowing a further degree of remote control. Such a connection can be realized either using a smart phone or a tablet to communicate with the valve via a gateway of a local area network or a wide area network, either through a wire or wireless connection (for example a Wi-Fi™ connection), or via an external telecommunications network using a smartphone, a telephone network, a local or wide area network..

Depending on the temperature setpoints predefined for the thermostatic valve, the thermal behavior of the room and environmental parameters such as outside temperature and/or humidity, the thermostatic radiator valve may have to often adapt its aperture so as to reach the predefined temperature setpoint. The movements of the motor of the valve are therefore increased. This leads to a number of drawbacks: in some instances, the movement of the motor of the valve may induce a noise which is a sound discomfort especially at night when the user sleeps; also, these movements of the motor of the valve reduce the lifetime of the valve itself, in particular of the battery of the valve. More importantly, systems of the prior art do not provide an efficient control of the maintenance of a temperature of a room or area at a desired temperature.

There is a need for a better definition of the valve aperture while maintaining the thermal control within a room to ensure that the temperature setpoints in the room are reached.

**SUMMARY OF THE INVENTION**

The invention aims to provide a system and method for defining an optimal valve aperture of a thermostatic radiator valve for a predefined temperature setpoint for the thermostatic radiator valve, thus minimizing the variation of the valve aperture. This leads to a more efficient control of the maintenance at the desired temperature of rooms or areas in a building at desired temperatures. It also leads to less noise from the valve and a longer lifetime of the valve itself, in particular the motor and the battery of the valve.

To this end, the subject of the invention is a thermostatic valve, comprising an aperture to adjust a flow of transfer fluid from a thermal energy generator entering a heat exchanger, the TRV comprising a communication link to a processing unit; an input interface configured to acquire at least one TRV-defined temperature setpoint; the TRV being further configured to calculate a first aperture setting of the aperture to be set, the first aperture setting being defined as a function of a temperature configuration model available at the processing unit and environmental parameters.

According to an embodiment of the invention, the processing unit is connected to a thermostat controlling the thermal energy generator.

According to another embodiment of the invention, the first aperture setting of the aperture is further defined as a function of a time schedule of the TRV-defined temperature setpoints.

According to another embodiment of the invention, the TRV is further configured to store the time schedule of the TRV-defined temperature setpoints.

According to another embodiment of the invention, the TRV is configured to detect a temperature variation, the TRV being further configured to calculate a second aperture setting of the aperture to be set.

According to another embodiment of the invention, the flow of transfer fluid generating a heating power, the TRV is further configured to calculate a first coefficient to be applied to the heating power to reach a TRV-defined temperature setpoint, and to convert the first coefficient into the first aperture setting of the aperture.

According to another embodiment of the invention, the flow of transfer fluid generating a cooling power, the TRV is further configured to calculate a first coefficient to be applied to the cooling power to reach a TRV-defined temperature setpoint, and to convert the first coefficient into the first aperture setting of the aperture.

According to another embodiment of the invention, the first aperture setting of the aperture is further defined as a function of the predicted outside temperatures and/or variation between the predicted outside temperatures and the real outside temperatures.

According to another embodiment of the invention, the TRV is further configured to calculate the second aperture setting of the aperture if a variation threshold between the predicted outside temperatures and the real outside temperatures is reached.

According to another embodiment of the invention, the TRV is further configured to calculate the second aperture setting of the aperture if a variation threshold of the outside temperature and/or inside temperature is reached.

The invention also relates to a method for determining a first aperture setting of a thermostatic radiator valve comprising an aperture to adjust a flow of transfer fluid from a thermal energy generator entering a heat exchanger, the TRV comprising a communication link to a processing unit; an input interface configured to acquire a TRV-defined temperature setpoint; the method comprising the step of calculating a first aperture setting of the aperture to be set for a predetermined duration, the first aperture setting being defined as a function of a temperature configuration model available at the processing unit, and environmental parameters.

According to another embodiment of the invention, the method may comprise a step of storing the time schedule of the TRV-defined temperature setpoints.

According to another embodiment of the invention, the method may comprise a step of calculating a second aperture setting of the aperture to be set for the predetermined duration, when detecting a temperature variation.

According to another embodiment of the invention, the flow of transfer fluid generating a heating power, the step of calculating the first aperture setting comprises a step of calculating a first coefficient to be applied to the heating power to reach a TRV-defined temperature setpoint of the time schedule, and a step of converting the first coefficient into the first aperture setting of the aperture.

According to another embodiment of the invention, the flow of transfer fluid generating a cooling power, the step of calculating the first aperture setting comprises a step of calculating a first coefficient to be applied to the cooling power to reach a TRV-defined temperature setpoint of the time schedule, and a step of converting the first coefficient into the first aperture setting of the aperture.

## BRIEF DESCRIPTION OF THE DRAWINGS

The accompanying drawings illustrate various non-limiting, exemplary, innovative aspects in accordance with the present description:

- Figure 1 schematically represents an example of a thermostatic radiator valve according to the invention;
- Figure 2 schematically represents an embodiment of the thermostatic radiator valve configured to calculate an aperture setting of the aperture of the valve according to the invention;
- Figure 3 schematically represents another embodiment of the thermostatic radiator valve configured to calculate an aperture setting of the aperture of the valve according to the invention;
- Figure 4 schematically represents another embodiment of the thermostatic radiator valve configured to calculate an aperture setting of the aperture of the valve according to the invention;
- Figure 5 represents a configuration of the temperature evolution depending on the temperature setpoint and the environmental parameters using a thermostatic radiator valve of the prior art;

- Figure 6 represents the same configuration of the temperature evolution depending on the temperature setpoint and the environmental parameters using a thermostatic radiator valve according to the invention;
- Figure 7 represents another configuration of the temperature evolution depending on the temperature setpoint and the environmental parameters using a thermostatic radiator valve according to the invention;
- Figure 8 represents a block diagram of the steps to calculate the aperture setting of the aperture of the valve according to the invention.

For the sake of clarity, the same elements have the same references in the various figures.

The invention is described with self-regulating valves fitted to a hot water heating system radiator and a boiler but it may be applied by analogy to any heating system comprising a central generator (from thermal, geothermal energy) and a plurality of radiators with corresponding regulating devices, as well as heat pumps. The invention may also be applied to any cooling system, usually comprising cooling generators. When cooling is considered, the heat transfer fluid flows from the cold source to the hot sink.

Moreover the invention is described with a thermostatic radiator valve 21 in the field of heating but relates more generally to a thermostatic radiator valve (TRV) configured to adjust a flow of heat transfer fluid from a thermal energy generator entering a heat exchanger based on a temperature setpoint, the thermal energy generator and the heat exchanger being configured to heat or cool a room with a room temperature, the TRV comprising a communication link to a processing unit that may be connected to a thermostat controlling the thermal energy generator; an input interface configured to one or more of allow a user to enter or acquire a TRV-defined temperature setpoint; wherein the TRV is further configured to calculate a first aperture setting of the aperture to be set for a predetermined duration, the first aperture setting being defined as a function of a second aperture setting received from the processing unit, a time schedule of the at least one TRV-defined temperature setpoint and environmental parameters.

In the following, the invention will be described with the heat transfer fluid being a heating fluid, the heat exchanger being a heat emitter and the thermal energy generator being a heat generator. But the heat transfer fluid can also be a cooling fluid, the heat exchanger a cooling emitter and the thermal energy generator a cooling generator.

## DETAILED DESCRIPTION

As previously mentioned, although many of the features of this invention are described in relation to a residential home environment, it is understood that they are generally applicable to many office and industrial building applications, but also to transportation means as well, like cruise liners, cargos, trains, or the like.

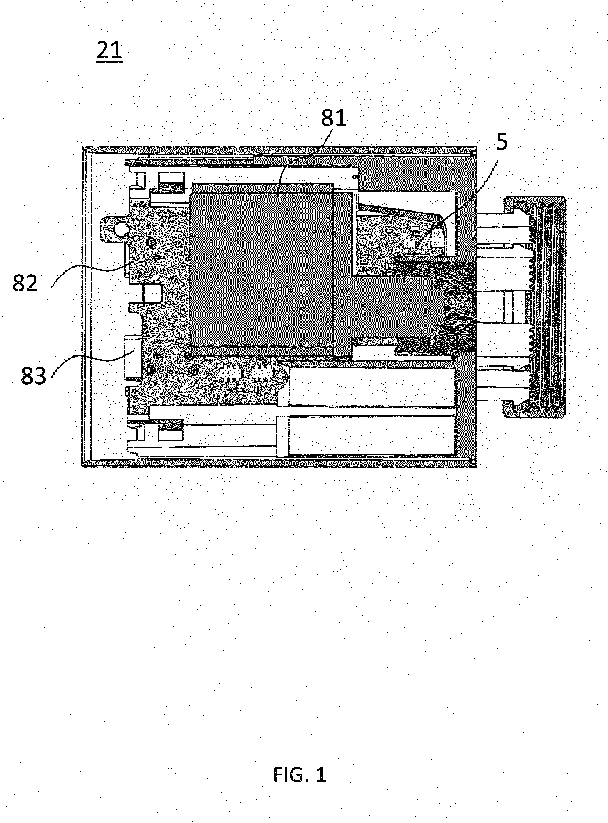

**Figure 1** schematically represents a thermostatic radiator valve (TRV) according to the invention. The TRV 21 comprises a motor 81, an electronic card 82. In an embodiment, the thermostatic radiator valve 21 may comprise a temperature sensor 83. The motor 81 may be replaced by any other valve aperture control system able to reduce or increase the fluid flow in the heat emitter.

The TRV 21 is a self-regulating valve fitted to a heating fluid conduit from a heat generator entering a heat emitter (or radiator) to which the TRV 21 is connected. The TRV 21 may include a memory to store some data such as one or more temperature setpoints, possibly with a schedule and/or time stamps. Depending on the surrounding temperature, for example measured by the TRV 21, and a temperature setpoint of the TRV 21, an electronic card 82 comprising a calculator may activate the motor 81 to mechanically adapt the aperture 5 of the TRV 21. Such a TRV 21 gradually closes as the temperature of the surrounding area increases, limiting the amount of heating fluid entering the heat emitter.

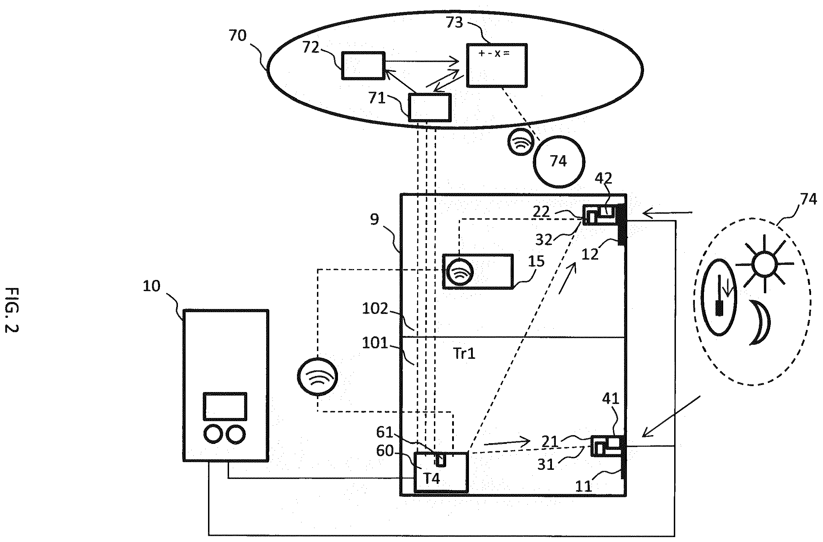

**Figure 2** schematically represents an embodiment of the thermostatic radiator valve 21 configured to calculate an aperture setting of the aperture 5 of the valve 21 according to the invention. The TRV 21 is in a first room 101. The TRV 21 comprises the aperture 5 to adjust a flow of heating fluid from a heat generator 10 entering a heat emitter 11 in the first room 101 based on a first TRV-defined temperature setpoint. The TRV 21 comprises a communication link 31 to a processing unit; an input interface configured to acquire the first TRV-defined temperature setpoint. In some embodiments, the processing unit may be located in a same packaging as the TRV, the communication link being for instance a data bus. In some other embodiments, the processing unit may be located in a same packaging as the thermostat controlling the heat generator or nearby or in the same packaging as a relay that may be connected to the TRVs through a wired or radio connection (Zigbee, Wi-Fi, Bluetooth™...). In some embodiments, the input interface may be configured to allow a user to input a temperature setpoint or a plurality of temperature setpoints. In some other embodiments, the input interface may be configured to receive temperature setpoint(s) calculated by a programmed logic. In still other embodiments, the input interface may be configured to operate according to the two previously defined embodiments, at the option of the user or in defined conditions. According to the invention, the TRV 21 is further configured to calculate a first aperture setting of the aperture 5 to be set, the first aperture setting being defined as a function of a temperature configuration model available at the processing unit, environmental parameters 74. The environmental parameters 74 may be measured by a sensor linked to the TRV or by an independent sensor like a weather station which also provides geolocalized forecasts, or they may come from an external source via the internet (from an application such as Weather Channel).

In some implementations of the invention, in particular some configuration of collective heating where there is no thermostat to trigger the transfer fluid generator (for example a boiler) on or off, it is assumed that hot water is present all the time. In other implementations, for instance individual heating, there is generally a thermostat 60. The processing unit is connected to the thermostat 60 controlling the heat generator 10. The invention is explained in this case but also applies to implementations without a thermostat.

The first aperture setting may further be defined as a function of a time schedule 171 of the TRV-defined temperature setpoints.

The processing unit may also comprise a second communication link 32 to a second TRV 22 comprising an aperture 5 to adjust a flow of heating fluid from the heat generator 10 entering a second heat emitter 12 in the same room 101 or in a second room 102. The second TRV 22 is configured to calculate a second aperture setting defined as a function of a temperature configuration model available at the processing unit, a second time schedule 172 of the TRV-defined temperature setpoints and environmental parameters. The environmental parameters taken into account by the TRV 22 may be identical or different from the environmental parameters taken into account by the TRV 21, depending on the position of the rooms.

In some embodiments, the temperature configuration model available at the processing unit may be implemented in the processing unit without any possibility of update. In some embodiments there may be provided only offline updates, for example through uploads from an external device like a USB stick. In some other embodiments, the temperature configuration model available at the processing unit may be updated online via a communication interface connected to an internet network.

The TRV may be connected to a server 70 comprising a communication link 71 to the thermostat 60. An implementation of the server may be a server 70 comprising a communication link 71 to one or more buildings, and a memory 72 or an access to a memory having stored thereon a database of values of temporal sequences of environmental parameters 74 captured from a plurality of TRVs, thermostats and sensors located in the one or more buildings. The server may further comprise a processing unit configured to calculate parameters of the temperature configuration model. The parameters may be determined by a learning module receiving as input values of temporal sequences of environmental parameters stored in the database and may be distributed to at least part of one or more buildings through the communication link. Note that the expression "server" may designate one or more virtual machines that are executed on a plurality of physical machines located locally and/or anywhere "in the cloud".

The one or more TRVs may receive a temperature setpoint from a thermostat 60 connected to the one or more TRVs, directly or via a relay. The TRVs 21, 22 may capture and store information like ambient temperatures and temperature setpoints. The thermostat 60 may send this data to the server 70. The server 70 may comprise a communication link 71 configured to receive and send data from/to the thermostat 60 through an internet network 15, a memory 72 configured to store data, a control algorithm 73 configured to perform calculations. The control algorithm 73 may be configured to receive through the internet network 15 the actual environmental parameters 74, calculate parameters of the temperature configuration model and send the parameters to the processing unit. The TRV further calculates a first coefficient to be applied to the heating power to reach a TRV-defined temperature setpoint of the time schedule, and the TRV converts the first coefficient into the first aperture setting of the aperture 5. The first coefficient is calculated as a function of the temperature configuration model, the temperature setpoints of the time schedule and the environmental parameters.

In some embodiments of the invention, the temperature configuration model is loaded in the processing unit at the time of configuration and may be updated off-line from time to time by a user, for instance using a USB stick or a disk. In other embodiments, the temperature configuration model is uploaded to the processing unit on-line through an internet connection to a server 70 that updates the temperature configuration model from time to time with environmental data that are received from the TRVs or the thermostat of one or more buildings. The devices that are connected to the network, as well as the network and/or the data transfer should be protected against tampering and data theft by means such as data encryption.

The temperature configuration model available at the processing unit considers the history of information from the TRV 21 for a predetermined period, for example 1 week, or 2 weeks, or even 1 or several month(s). This information notably comprises the TRV-defined temperature setpoint defined by the user, the commands sent to the motor of the TRV, the ambient temperature measured by the TRV, the outdoor temperature. This information is used to estimate the needed heating requirement in order to keep the ambient temperature stable regardless of the weather conditions. Additionally, the information may also comprise the state of the heat generator (on or off) and/or the presence of persons in the room. In the latter case, this will allow taking into account the heat generated by the persons in the room and/or relaxing the precision of the temperature maintenance in an empty room.

From this information, the processing unit configured with the algorithm 73 computes the various parameters of the temperature configuration model, for instance:

- the heat capacity C (J/°K) or the amount of energy needed to raise the room temperature by 1°K. This parameter varies depending mainly on the volume and the architecture of the room;
- the heat transfer coefficient K (W/°K) between the inside and the outside of the room. Heat losses are conventionally represented by the convective hypothesis, which assumes a linear relationship between heat flow and temperature difference between the inside and the outside of the room. K mainly depends on the openings, the nature of the walls and floors, heat exchange with the outside, sun exposure, ...;
- the output power P (W) supplied by the heating system including all potential free inputs related to sunshine and human presence in the room;
- the number of degrees gained by the system in one hour dh (°K/h).

The calculation is based on the analogy between the heating/cooling system and an electric RC circuit. In this analogy, the heating phase corresponds to the charging of the capacity of the RC circuit. In other words, the previous parameters are computed by comparing the room thermal behavior to that of a RC electric circuit with C being the room heat capacity and R=1/K the thermal conductance, K being the heat transfer coefficient defined above.

After the resolution of the corresponding differential equations, the measured temperature has the following form:

$$T = (T_0 - T_{ext} - P*R)* \exp(-t/tau) + T_{ext} + P*R. \quad \text{(Eq. 1)}$$

Where R is the resistance and C the capacitance of the circuit, P is the power of the heating circuit (W), with tau = R*C; $T_0$ is the initial room temperature; Text is the outside temperature.

It can be noted that when the opening of the valve is modified, this is equivalent to reducing the value of P. Hence, in the following, P is replaced by "alpha *P" where alpha is the first coefficient to be applied to the heating power.

The method consists of evaluating a number of degrees that the system shall gain in one hour (dh), i.e. dh = $T - T_0$ when t = 3600 seconds. Eq. 1 becomes:

$$T = (T_0 - T_{ext} - P/K)* \exp(-3600*K/C) + T_{ext} + alpha*P/K. \quad \text{(Eq.2)}$$

The parameters of the systems P, C and K are known from the model. $T_0$ and $T_{ext}$ are measured or forecast. The aperture setting or coefficient (alpha) that allows reaching a target temperature T after the predefined period of time t is therefore obtained as a solution of Eq. 1:

$$alpha = K/P * (T - T_{ext} - (T_0 - T_{ext} - P/K)* \exp(-3600*K/C) ). \quad \text{(Eq. 3)}$$

The first coefficient alpha to be applied to the heating power being determined, the first aperture setting, corresponding to the optimal aperture of the TRV, can be calculated. The first aperture setting is a function of the first coefficient alpha (i.e., if the first aperture setting is noted x, x=f(alpha)). The function (noted f) may be a multiplicative constant determined empirically or experimentally. This function (noted f) may also be calculated depending on the water temperature and the temperature setpoint.

It is to be noted that the analogy with an electric RC circuit is presented here as an example. As explained before, the electrical analogy enables to represent all or part of a building in the form of an electrical resistance-capacitance (RC) circuit. The advantage of this model lies in its flexibility: it allows to model the whole building or only a part of it, but also to vary the level of details of the modeling (number of walls modeled, number of layers in the walls, etc.).The invention allows the decomposition of the space to be heated, the heating elements and the sources of heat loss following the same methodology as the decomposition of electric circuits depending on the level of details of the model, like R3C1 (3 resistances and 1 capacitance), R2C3 (2 resistances and 3 capacitances), R25C10 (25 resistances and 10 capacitances), etc,. Instead of the electric RC circuit, it is also possible to use a model like Unified Degree Day based on the estimation of the thermal energy consumption in relation to the severity of winter or the heat of the summer. The model Unified Degree Day, developed in partnership with Météo France (Weather forecast service in France), can be used to calculate the degree day (DJ or DJU) over a period, a weather station and a given temperature threshold. The degree day is a value representative of the difference between the temperature of a given day and a pre-set temperature threshold (18 ° C in the case of DJUs or Unified Day Degree). Summed over a period, they make it possible to calculate the heating and cooling needs of a building. Detailed thermal models (including the wall composition, volumes and furniture localization, etc.) may also be used.

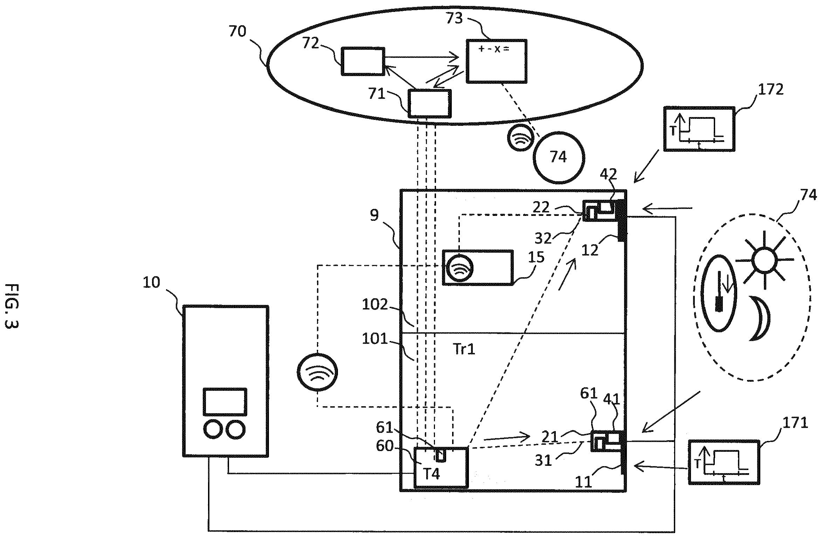

**Figure 3** schematically represents another embodiment of the thermostatic radiator valve configured to calculate an aperture setting of the aperture of the valve according to the invention. The TRV 21 may be configured to store the time schedule 171 of the TRV-defined temperature setpoints. In this embodiment, the TRV 21 comprises a memory 61 to store the time schedule. The calculations are performed at each instant targeted in the time schedule or may be performed in advance. The time schedule may be daily, weekly or monthly, etc.

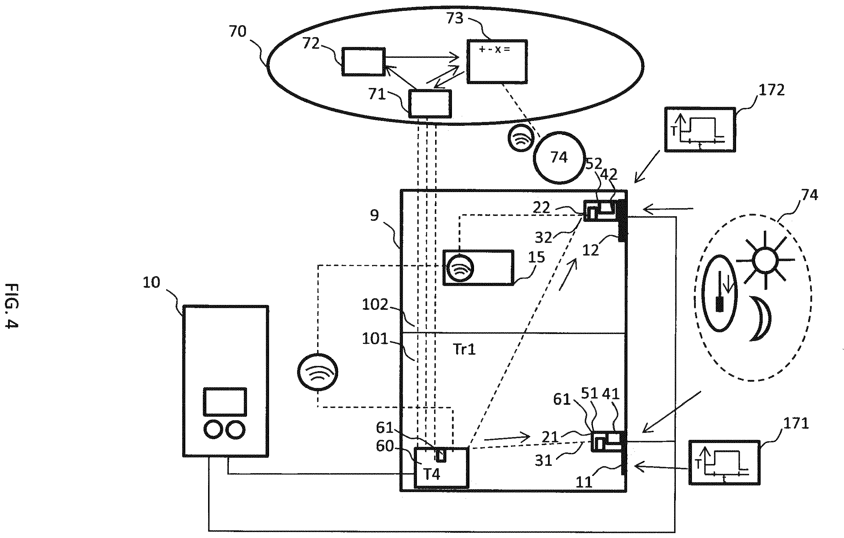

**Figure 4** schematically represents another embodiment of the thermostatic radiator valve configured to calculate an aperture setting of the aperture of the valve according to the invention.

The TRV in figure 4 is identical to the TRV presented in figure 2 or figure 3. Additionally, the TRV 21 in figure 4 further comprises a temperature sensor 51 configured to detect a temperature variation, the TRV being further configured to calculate a second aperture setting of the aperture 5 to be set. In a configuration, the TRV 21 calculates another aperture setting when the temperature sensor 51 detects a large temperature variation, the same way as previously explained, since the initial temperature T0 changed. The user can predetermine the temperature variation from which a second aperture setting should be calculated by the TRV. In other words, the calculation of the second aperture setting may be performed only if a variation threshold of the outside temperature is reached, and/or if a variation threshold of the inside temperature is reached (for example if a window is open or if there are people in the room).

The first setting of the aperture may be defined as a function of the predicted outside temperatures and/or variation between the predicted outside temperatures and the real outside temperatures. The TRV may be configured to calculate the second aperture setting of the aperture 5 if a threshold for the variation of the outside temperature is reached. The TRV may also be configured to calculate the second aperture setting of the aperture 5 only if a threshold for the variation between the predicted outside temperatures and the real outside temperatures is reached. If the variation of the predicted or actual temperature is too short, no adjustment of the TRV aperture is triggered (for example if someone airs a room).

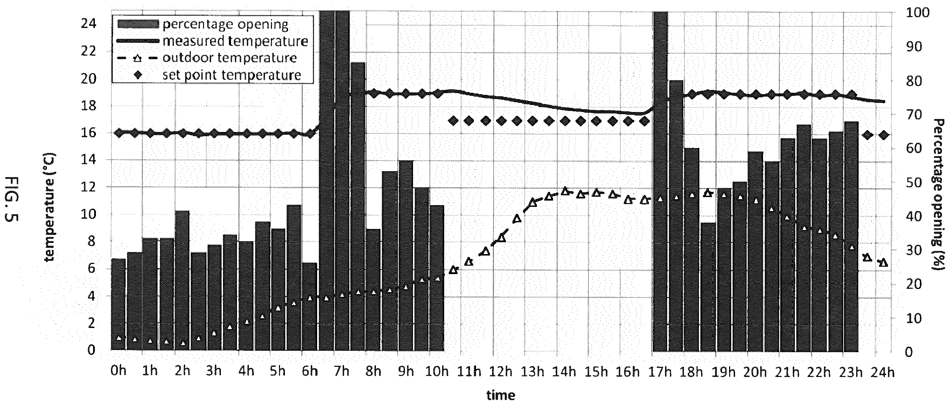

**Figure 5** represents a configuration of the temperature evolution depending on the temperature setpoint and the environmental parameters using a thermostatic radiator valve of the prior art.

The time schedule of TRV-defined temperature setpoints is as follows (diamond marks): 16°C from 11:30 pm to 6:30 am, 19°C from 6:30 am to 10:30 am, 17°C from 10:30 am to 5 pm, and 19°C from 5 pm to 11:30 pm. The outside temperature Text varies as presented in dashed line with triangle marks. In order to reach the TRV-defined temperature setpoints throughout the day depending on the time schedule of the TRV-defined temperature setpoints and the evolution of the outside temperature Text, the aperture setting (corresponding to the opening percentage of the TRV) represented as an histogram varies throughout the day (see the scale on the right hand side of the figure). This means that there are a lot of movements of the motor of the valve (36 aperture settings in this example), thus inducing a noise which is a sound discomfort especially at night when the user sleeps. Furthermore these movements of the motor of the valve reduce the lifetime of the TRV, in particular of its battery.

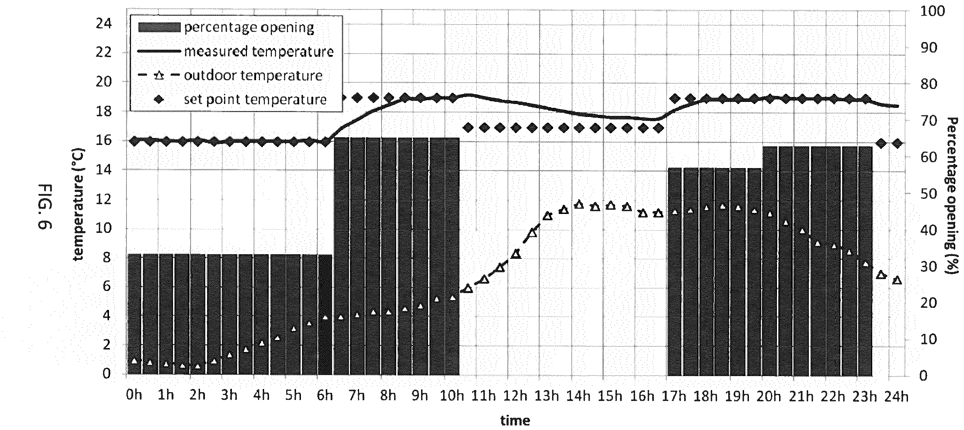

**Figure 6** represents the same configuration of the temperature evolution depending on the temperature setpoint and the environmental parameters using a thermostatic radiator valve according to the invention.

The time schedule of the TRV-defined temperature setpoints and the outside temperature Text are identical to those presented in Figure 5.

Starting from midnight and in accordance with the invention, the TRV calculates a first aperture setting of the aperture to be set for a predetermined duration, the first aperture setting being defined as a function of a temperature configuration model available at the processing unit, the time schedule of the TRV-defined temperature setpoints (i.e. 16°C until 6:30 am) and environmental parameters. This first aperture setting corresponds to 33%. At 6:30 am, the time schedule indicates a TRV-defined temperature setpoint of 19°C until 10:30 am.

For this time period, the TRV calculates a second aperture setting corresponding to 65%, taking into account the temperature configuration model available at the processing unit, the time schedule of the TRV-defined temperature setpoints (i.e. 19°C until 10:30 am) and environmental parameters. At 10:30 am, the time schedule indicates a TRV-defined temperature setpoint of 17°C until 5:00 pm.

The TRV calculates a third aperture setting for this time period, as a function of the temperature configuration model available at the processing unit, the time schedule of the TRV-defined temperature setpoints and environmental parameters. Knowing the history of the outside temperature (or the weather forecast for the day), the outside temperature is known to vary from 6 to about 12°C for this time period. The room temperature being 19°C at the beginning of this time period, and thanks to the temperature configuration model, the TRV calculates the third aperture setting to be 0%. In other words, for this time period, no further heating takes place. The measured temperature in the room slowly decreases from 19°C to about 16°C during this time period. At 5:00 pm the time schedule indicates a TRV-defined temperature setpoint of 19°C until 11:30 pm.

For this time period, the TRV calculates a fourth aperture setting corresponding to 57%, taking into account the temperature configuration model available at the processing unit, the time schedule of the TRV-defined temperature setpoints (i.e. 19°C until 11:30 pm) and environmental parameters. For this time period, the outside temperature is known to decrease. There is a need for additional heating in the room. The TRV calculates the fourth aperture setting to be 57%. The measured temperature in the room increases from about 16°C to 19°C as requested within one hour. That is to say that the TRV-defined temperature setpoint of 19°C is already reached at 6:00pm, with a single aperture setting. Later on, even if the TRV-defined temperature setpoint of 19°C is set until 11:30pm, a fifth aperture setting is calculated by the TRV at 8:00pm. Indeed during this time period (8:00 to 11:30pm), the outside temperature decreases from about 12°C to 8°C. There is therefore a need for further heating to maintain the same room temperature.

The TRV calculates the fifth aperture setting to be 63%, and as can be seen on the figure 6, this fifth aperture setting set from 8:00 to 11:30 pm enables to maintain the room temperature at 19°C even if the outside temperature decreases. At 11:30 pm, the time schedule indicates a TRV-defined temperature setpoint at 16°C.

The TRV calculates a sixth aperture setting for this time period, as a function of the temperature configuration model available at the processing unit, the time schedule of the TRV-defined temperature setpoints and environmental parameters. Knowing the history of the outside temperature (or the weather forecast for the day), the outside temperature is known to be about 7°C for this time period. The room temperature being 19°C at the beginning of this time period, and thanks to the temperature configuration model, the TRV calculates the sixth aperture setting to be 0%. In other words, for this time period, no further heating takes place. At midnight (or later on depending on the outside temperature), another aperture setting may be calculated by the TRV. If the outside temperature and the time schedule of TRV-defined temperature setpoints are assumed to be exactly the same as those of the previous day, the TRV will calculate the same aperture settings (or store them to use them directly). In this example, the invention enables to reach the TRV-defined temperature setpoints throughout the day only with 6 aperture settings (instead of 36 as presented in figure 5). This means a longer lifetime of the motor and the battery of the valve.

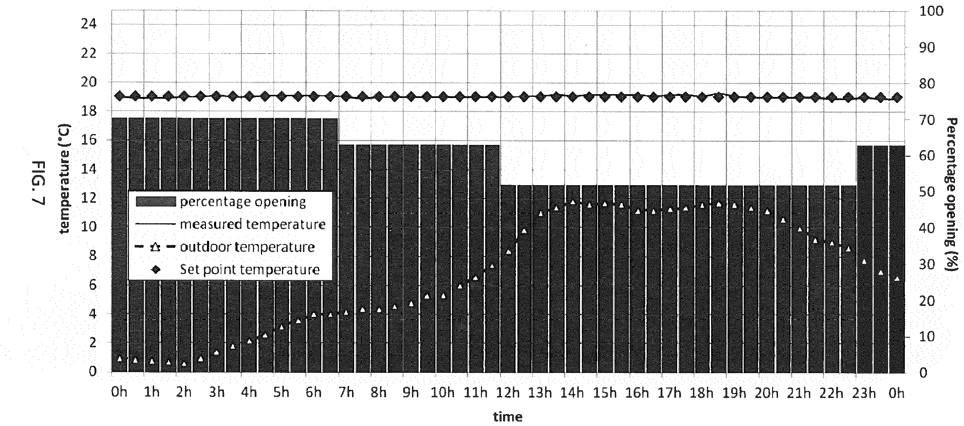

**Figure 7** represents another configuration of the temperature evolution depending on the temperature setpoint and the environmental parameters using a thermostatic radiator valve according to the invention. In the example presented in Figure 7, there is only one TRV-defined temperature setpoint at 19°C (diamond marks). The variation of the outside temperature Text is represented in dashed line with triangle marks. The TRV calculates a first aperture setting of 70% for the time period 0:00 to 6:30 am, a second aperture setting of 63% from 6:30 am to 12:00 am, a third aperture setting of 52% from 12:00 am to 11:00 pm and a fourth aperture setting until 00:00 at 63%. As already explained before, even if the TRV-defined temperature setpoint of 19°C is set all day long, various (4 different) aperture settings are calculated by the TRV. Indeed during the day, the outside temperature increases from about 1°C to 12°C and then decreases. There is therefore a need for a different heating at various times of the day to maintain the same room temperature.

It can be noted that according to some embodiments of the invention, the time to send commands of modifying the valve aperture may be calculated in advance according to the expected changes in the outside temperature (with adjustments when necessary, if the actual temperature is different from the predicted temperature).

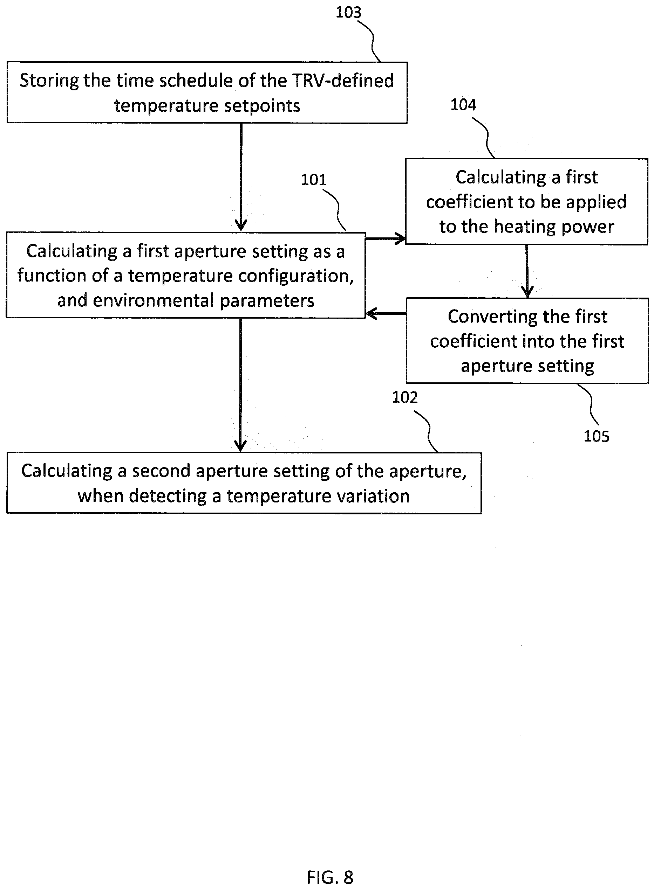

**Figure 8** represents a block diagram of the steps to calculate the aperture setting of the aperture of the valve according to the invention. The method for determining a first aperture setting of a thermostatic radiator valve TRV 21 comprising an aperture 5 to adjust a flow of heat transfer fluid from a thermal energy generator 10 entering a heat exchanger 11, the TRV 21 comprising a communication link 31 to a processing unit; an input interface configured to one or more of allow a user to enter or acquire a TRV-defined temperature setpoint. The method comprises the step 101 of calculating a first aperture setting of the aperture 5 to be set for a predetermined duration, the first aperture setting being defined as a function of a temperature configuration model available at the processing unit, a time schedule of the TRV-defined temperature setpoints and environmental parameters. The environmental parameters may be actual or forecasted environmental parameters or a combination of both.

The method according to the invention may comprise an additional step of storing the time schedule 171 of the TRV-defined temperature setpoints.

The method according to the invention may comprise a step 102 of calculating a second aperture setting of the aperture 5 to be set for the predetermined duration, when detecting a temperature variation.

The flow of heat transfer fluid generating a heating power, the step 101 of calculating the first aperture setting may further comprise a step 104 of calculating a first coefficient (alpha) to be applied to the heating power to reach a TRV-defined temperature setpoint of the time schedule, and a step 105 of converting the first coefficient into the first aperture setting of the aperture 5.

The examples disclosed in this specification are only illustrative of some embodiments of the invention. They do not in any way limit the scope of said invention which is defined by the appended claims.

**Claims**

1. A thermostatic valve (TRV, 21), comprising an aperture (5) to adjust a flow of transfer fluid from a thermal energy generator (10) entering a heat exchanger (11), the TRV (21) comprising:

   - a communication link (31) to a processing unit;
   - an input interface configured to acquire at least one TRV-defined temperature setpoint;

wherein the TRV (21) is further configured to calculate a first aperture setting of the aperture (5) to be set, the first aperture setting being defined as a function of a temperature configuration model available at the processing unit and environmental parameters.

2. The TRV of claim 1, wherein the processing unit is connected to a thermostat (60) controlling the thermal energy generator (10).

3. The TRV of claim 1 or 2, wherein the first aperture setting of the aperture (5) is further defined as a function of a time schedule of the TRV-defined temperature setpoints.

4. The TRV of claims 1 to 3, further configured to store the time schedule (171, 172) of the TRV-defined temperature setpoints (Tr1).

5. The TRV of claims 1 to 4, configured to detect a temperature variation, the TRV being further configured to calculate a second aperture setting of the aperture (5) to be set.

6. The TRV of claims 1 to 5, wherein the flow of transfer fluid is generating a heating power, the TRV being further configured to calculate a first coefficient to be applied to the heating power to reach a TRV-defined temperature setpoint, and to convert the first coefficient into the first aperture setting of the aperture (5).

7. The TRV of claims 1 to 5, wherein the flow of transfer fluid is generating a cooling power, the TRV being further configured to calculate a first coefficient to be applied to the cooling power to reach a TRV-defined temperature setpoint, and to convert the first coefficient into the first aperture setting of the aperture (5).

8. The TRV of claims 1 to 7, wherein the first aperture setting of the aperture (5) is further defined as a function of the predicted outside temperatures and/or variation between the predicted outside temperatures and the real outside temperatures.

9. The TRV of claims 5 to 8, further configured to calculate the second aperture setting of the aperture (5) if a variation threshold between the predicted outside temperatures and the real outside temperatures is reached.

10. The TRV of claims 5 to 9, further configured to calculate the second aperture setting of the aperture (5) if a variation threshold of the outside temperature and/or inside temperature is reached.

11. A method for determining a first aperture setting of a thermostatic radiator valve (TRV, 21) comprising an aperture (5) to adjust a flow of transfer fluid from a thermal energy generator (10) entering a heat exchanger (11), the TRV (21) comprising:

    - a communication link (31) to a processing unit;
    - an input interface configured to acquire a TRV-defined temperature setpoint;

    the method comprising the step of:

    - calculating (101) a first aperture setting of the aperture (5) to be set for a predetermined duration, the first aperture setting being defined as a function of a temperature configuration model available at the processing unit, and environmental parameters.

12. The method of claim 11, further comprising a step (103) of storing the time schedule (171, 172) of the TRV-defined temperature setpoints (Tr1).

13. The method according of claim 11 or 12, comprising a step (102) of calculating a second aperture setting of the aperture (5) to be set for the predetermined duration, when detecting a temperature variation.

14. The method of one of the claims 11 to 13, wherein the flow of transfer fluid is generating a heating power, the step (101) of calculating the first aperture setting comprising a step (104) of calculating a first coefficient to be applied to the heating power to reach a TRV-defined temperature setpoint of the time schedule, and a step (105) of converting the first coefficient into the first aperture setting of the aperture (5).

15. The method of one of the claims 11 to 13, wherein the flow of transfer fluid is generating a cooling power, the step (101) of calculating the first aperture setting comprising a step (104) of calculating a first coefficient to be applied to the cooling power to reach a TRV-defined temperature setpoint of the time schedule, and a step (105) of converting the first coefficient into the first aperture setting of the aperture (5).

21

81

5

82

83

FIG. 1

FIG. 2

FIG. 3

FIG. 4

FIG. 5

FIG. 6

EP 3 451 109 A1

16

FIG. 7

103

Storing the time schedule of the TRV-defined
temperature setpoints

104

Calculating a first
coefficient to be applied
to the heating power

101

Calculating a first aperture setting as a
function of a temperature configuration,
and environmental parameters

Converting the first
coefficient into the first
aperture setting

102

105

Calculating a second aperture setting of the aperture,
when detecting a temperature variation

FIG. 8

Europäisches
Patentamt

European
Patent Office

Office européen
des brevets

# EUROPEAN SEARCH REPORT

Application Number

EP 17 30 6116

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/011446 A1 (UNIV GLASGOW [GB]) 29 January 2015 (2015-01-29) | 1-5,8-13 | INV. G05D23/19 |
| Y | * page 7, line 20 - page 12, line 36; figures 1-3 * | 6,7,14,15 | F24D19/10 |
| Y | US 6 439 469 B1 (GRUBER PETER [CH] ET AL) 27 August 2002 (2002-08-27) | 6,7,14,15 | |
| A | * column 2, lines 33-67 * * column 5, line 1 - column 6, line 55; figures 1,3b,6 * | 1-5,8-13 | |
| X | US 2016/305678 A1 (PAVLOVSKI ALEXANDRE [CA] ET AL) 20 October 2016 (2016-10-20) | 1-5,8-13 | |
| Y | * paragraphs [0049] - [0056], [0064] - [0072]; figures 1,2,5 * | 6,7,14,15 | |
| X | US 2010/059598 A1 (LINDGREN MATTS [SE] ET AL) 11 March 2010 (2010-03-11) | 1-5,8-13 | |
| Y | * the whole document * | 6,7,14,15 | |
| X | WO 2016/198745 A1 (LEANHEAT OY [FI]) 15 December 2016 (2016-12-15) | 1-5,8-13 | TECHNICAL FIELDS SEARCHED (IPC) |
| Y | * the whole document * | 6,7,14,15 | G05D F24D F24F G05B |

The present search report has been drawn up for all claims

| Place of search | Date of completion of the search | Examiner |
|---|---|---|
| Munich | 1 March 2018 | Vañó Gea, Joaquín |

EPO FORM 1503 03.82 (P04C01)

## ANNEX TO THE EUROPEAN SEARCH REPORT
## ON EUROPEAN PATENT APPLICATION NO.

EP 17 30 6116

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2018

| Patent document cited in search report | | | Publication date | Patent family member(s) | | | Publication date |
|---|---|---|---|---|---|---|---|
| WO 2015011446 | A1 | | 29-01-2015 | EP<br>WO | 3025099<br>2015011446 | A1<br>A1 | 01-06-2016<br>29-01-2015 |
| US 6439469 | B1 | | 27-08-2002 | AT<br>EP<br>US | 342528<br>1074900<br>6439469 | T<br>A1<br>B1 | 15-11-2006<br>07-02-2001<br>27-08-2002 |
| US 2016305678 | A1 | | 20-10-2016 | CA<br>EP<br>US<br>WO | 2982375<br>3286501<br>2016305678<br>2016168910 | A1<br>A1<br>A1<br>A1 | 27-10-2016<br>28-02-2018<br>20-10-2016<br>27-10-2016 |
| US 2010059598 | A1 | | 11-03-2010 | AT<br>CN<br>EP<br>RU<br>US<br>WO | 412936<br>101652736<br>1956460<br>2009133469<br>2010059598<br>2008095963 | T<br>A<br>A1<br>A<br>A1<br>A2 | 15-11-2008<br>17-02-2010<br>13-08-2008<br>20-03-2011<br>11-03-2010<br>14-08-2008 |
| WO 2016198745 | A1 | | 15-12-2016 | NONE | | | |

For more details about this annex : see Official Journal of the European Patent Office, No. 12/82